(19) Europäisches Patentamt
European Patent Office
Office européen des brevets

(11) **EP 1 672 310 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
***G01B 7/012*** *(2006.01)*

(21) Anmeldenummer: **04029649.3**

(22) Anmeldetag: **15.12.2004**

(54) **Messender Tastkopf mit Vibrationsdämpfung für ein Koordinatenmessgerät**

Measuring head of the measuring type with vibration damping for coordinate measuring machine

Tête palpeuse du type mesurant avec dispositif antivibrant pour appareil de mesure de coordonnées

(84) Benannte Vertragsstaaten:
**AT BE BG CH CY CZ DE DK EE ES FI FR GB GR HU IE IS IT LI LT LU MC NL PL PT RO SE SI SK TR**

(43) Veröffentlichungstag der Anmeldung:
**21.06.2006 Patentblatt 2006/25**

(73) Patentinhaber: **Hexagon Metrology GmbH**
**35578 Wetzlar (DE)**

(72) Erfinder: **Müller, Hans-Jürgen**
**35619 Braunfels (DE)**

(74) Vertreter: **Knefel, Cordula**
**Patentanwältin,**
**Postfach 1924**
**35529 Wetzlar (DE)**

(56) Entgegenhaltungen:
**EP-A- 0 693 669      DE-A1- 3 106 031**
**DE-A1- 3 520 685**

EP 1 672 310 B1

**Beschreibung**

Die Erfindung betrifft einen Tastkopf vom messenden Typ für ein Koordinatenmessgerät.

Die Erfindung bezieht sich auf Tastköpfe vom messenden Typ. Sie bestehen aus einem festen Teil, das mit einer Einrichtung verbunden ist, die den Tastkopf in drei Raumdimensionen innerhalb eines definierten Messvolumens frei bewegen und positionieren kann, üblicherweise ein so genanntes Koordinatenmessgerät, sowie aus drei gegenüber dem festen Teil beweglich angeordneten Teilen. Die beweglichen Teile sind häufig als Schaukeln mit Parallelfederblechführung ausgebildet, die eine exakte Führung in jeweils einer Raumrichtung ermöglicht, wobei diese Bewegungsrichtungen üblicherweise orthogonal zueinander angeordnet sind, und alle anderen Freiheitsgrade festgelegt sind. Die Bewegungsrichtungen der drei Schaukeln bauen kinematisch so aufeinander auf, dass die letzte Schaukel der kinematischen Kette innerhalb eines Bewegungsspielraumes in Form eines Würfels von typisch einigen Millimetern Kantenlänge frei beweglich ist. Weiter sind Rückstellelemente vorgesehen, die die Tastkopfschaukeln in eine Ruhestellung bringen, die etwa in der Mitte des Bewegungsspielraumes liegt, wenn keine äußeren Kräfte auf die Schaukeln wirken. Weiter sind Positionsmesseinrichtungen vorgesehen, die die Abweichung von der Ruhelage der einzelnen Schaukeln messen und damit einen Auslenkvektor der kinematisch letzten Schaukel definieren. Die Nullpunkte dieser Positionsmesseinrichtungen definieren üblicherweise die genannte Ruhelage.

An der letzten Schaukel ist üblicherweise eine mechanische Schnittstelle vorgesehen, die ein automatisches Wechseln von so genannten Tasterkombinationen ermöglicht. Diese Schnittstelle besteht aus einer kinematisch definierten Lagerung, die genau alle sechs kinematischen Freiheitsgrade festlegt, damit beim wiederholten Einwechseln derselben Tasterkombination die Relativlage zwischen der Tastkopfschaukel und dieser Tasterkombination möglichst exakt reproduziert wird.

Beim taktilen Vermessen von Werkstücken mit Hilfe eines Koordinatenmessgerätes, an dem ein oben beschriebener Tastkopf befestigt ist, treten insbesondere beim kontinuierlichen Abtasten (Scannen) von Werkstücken unerwünschte Schwingungen sowohl der Tragstrukturen des Koordinatenmessgerätes als auch der Tastkopfschaukeln auf, die zu Messfehlern führen. Insbesondere die Schwingungen der Tastkopfschaukeln führen zu Oszillationen der Antastkräfte, die ihrerseits zu Änderungen der Tasterbiegung führen, die bei der Tasterkalibrierung nicht erfasst werden und deshalb nicht korrigiert werden können. Dies macht sich insbesondere bei langen und biegeweichen Tastern bemerkbar. Zu diesem Problem gibt es im Stand der Technik eine Reihe von Vorschlägen, wie diese unerwünschten Schwingungen gedämpft werden könnten.

Zum Stand der Technik (US-PS 5,088,208) gehört ein messender Tastkopf, der eine Dämpfungseinrichtung trägt, die aus einem Zylinder besteht, in dem sich eine zähe Flüssigkeit (Silicone) befindet, und einem Stempel, der in diese Flüssigkeit hineinragt. Die Dämpfungswirkung wird dadurch erzielt, dass der Stempel und der Zylinder jeweils mit den Komponenten des Tastkopfes fest verbunden sind, die sich gegeneinander bewegen.

Diese zum Stand der Technik gehörende Dämpfungsvorrichtung hat den Nachteil, dass die Flüssigkeit aus dem Zylinder herauslaufen kann. Dieses Problem wurde in der Druckschrift US-PS 5,088,208 durch eine Elastomermanschette gelöst, die den Stempel und den Zylinder umfasst. Diese Lösung hat jedoch wiederum den Nachteil, dass die Manschette undefinierte Zusatzkräfte auf die sich zueinander bewegenden Teile des Tastkopfes ausübt. Außerdem lässt sich eine solche Manschette nicht absolut dicht ausbilden, was zum unerwünschten Herauskriechen des Silikons führen kann. Weiter hat diese passive Dämpfungsvorrichtung den Nachteil, dass sie immer im Eingriff ist, was bei schnellen Lastwechseln an der Tastkopfschaukel zu Zusatzkräften führt, die ihrerseits den Taststift verbiegen, was zu Messfehlern führt.

Wird ein reibungsfreier oder zumindest reibungsarmer Elektromotor, beispielsweise ein Tauchspulensystem oder ein andersartig aufgebauter DC-Linearmotor verwendet, der mit dem mechanischen Schwingungssystem verbunden ist, kann eine nahezu beliebige geschwindigkeitsproportionale Dämpfung eingestellt werden. Dieser Elektromotor wird so zwischen dem beweglichen Teil und dem festen Teil einer Schaukel angeordnet, dass er Kräfte auf das bewegliche Teil ausüben kann. Selbstverständlich können auch rotatorisch wirkende Motoren verwendet werden, die mechanisch so mit den Schaukeln gekoppelt werden, dass die rotatorische Bewegung in eine lineare umgewandelt wird. Gemäß dem Stand der Technik werden solche Motoren zur Schwingungsdämpfung mittels rückgekoppelter Regelkreise angesteuert, die mindestens eine Zustandsgröße des mechanischen Schwingungssystems verwenden, um eine der Bewegungsrichtung des mechanischen Schwingungssystems entgegengesetzte Bremskraft zu erzeugen. Dies geschieht dadurch, dass der Regler abhängig von der beobachteten Zustandsgröße den Elektromotor so mit elektrischer Energie versorgt, dass die gewünschte Bremswirkung erzielt wird. Nachteilig ist hierbei jedoch, dass regelungstypisch Stabilitätskriterien einzuhalten sind. Legt man eine taktile Antastung zugrunde, führen stark wechselnde Tastergewichte, und je nach Antastrichtung stark unterschiedliche Federsteifigkeiten der biegenden Taster, zu einer großen Parameterbandbreite, die im Allgemeinen zu einem Kompromiss aufgrund der einzuhaltenden Stabilitätskriterien (auf hohe Dämpfung wird zum Beispiel verzichtet) oder zu einer aufwändigen Regelungsstrategie führen.

Zum Stand der Technik (DD 150 111) gehört eine Einrichtung zur Weg-Kraft-Koordinierung an Antastsystemen für Tastköpfe an Koordinatenmessgeräten. Gemäß dieser Druckschrift ist beschrieben, wie mittels DC-Linearmotoren eine Dämpfung der Bewegung des beweglichen Teiles eines Tastkopfes für Koordinatenmessmaschinen bewerkstelligt wird. Hierzu wird das Wegsignal der Wegmesseinrichtung des jeweiligen beweglichen Tastkopfteiles mittels eines Differential-Reglers (D-Reglers) auf den Linearmotor aufgeschaltet. Der D-Regler differenziert das Wegsignal und erhält dadurch ein der Geschwindigkeit proportionales Signal, das vom Regler weiterverarbeitet wird. Die Nachteile dieser Regler sind oben schon beschrieben. Die Vorteile der Regler liegen in ihrer Flexibilität, da sich der Betrag der Dämpfungskraft durch Änderung der Reglerparameter einstellen lässt.

Weiterhin gehört zum Stand der Technik (EP 0 693 669 B1) ein Tastkopf für Koordinatenmessgeräte mit einer Dämpfungseinrichtung, die auf dem Wirbelstromprinzip beruht. Hierzu ist es notwendig, in den Feldbereich der Magnete des in der EP 0 693 669 B1 beschriebenen Linearmotors (Tauchspulen) ein zusätzliches Stück metallischen Leiters einzubringen, das sich bei Auslenkung des beweglichen Teiles des Tastkopfes relativ zu den magnetischen Feldlinien verschiebt. Gemäß der Druckschrift EP 0 693 669 B1 wird die Verwendung von metallenen Spulenkörpern für die Tauchspulen vorgeschlagen. Durch die Verschiebung werden in dem metallischen Spulenkörper in sich geschlossene Wirbelströme induziert, die ihrerseits ein Magnetfeld aufbauen, das dem sie erzeugenden Magnetfeld entgegengerichtet ist. Dadurch wird eine Kraft erzeugt, die der Bewegung entgegengerichtet ist und sie damit dämpft. Nachteilig ist, dass der Betrag des Stromes und damit der der Gegenkraft durch den jedem elektrischen Leiter bei Zimmertemperaturen innewohnenden elektrischen Widerstand begrenzt ist. Außerdem lässt sich der Proportionalitätsfaktor, der die Geschwindigkeit der zu dämpfenden Bewegung mit der Dämpfungskraft verknüpft, nicht verändern. Die Dämpfungskraft ist der Geschwindigkeit des beweglichen Tastkopfteiles proportional und in ihrem Betrag nur von der Magnetfeldstärke, der Geometrie der Bauteile und vom spezifischen Widerstand des Metallteiles, in dem die Wirbelströme fließen, abhängig. Der Vorteil dieser Dämpfungseinrichtung liegt in der Robustheit, da im Gegensatz zum Regler keinerlei Stabilitätskriterien zu beachten sind.

Das der Erfindung zugrunde liegende technische Problem besteht darin, einen Tastkopf vom messenden Typ für ein Koordinatenmessgerät mit einer Dämpfungseinrichtung anzugeben, welcher die Flexibilität eines Reglers mit der Robustheit des Wirbelstromprinzips vereint.

Dieses technische Problem wird durch einen Tastkopf mit den Merkmalen des Anspruches 1 gelöst.

Dadurch, dass der Tastkopf vom messenden Typ für ein Koordinatenmessgerät mit einem festen und wenigstens einem dagegen verschieblichen Teil und mit wenigstens einer Dämpfungsvorrichtung zur Dämpfung der auftretenden Schwingungen ausgebildet ist, und dadurch, dass die wenigstens eine Dämpfungsvorrichtung als ein Elektromotor, vorzugsweise als reibungsfreier DC-Linearmotor ausgebildet ist, wobei der Elektromotor an wenigstens einem negativen ohmschen Widerstand angeschlossen ist, ist der erfindungsgemäße Tastkopf mit der Dämpfungsvorrichtung sehr flexibel und gleichzeitig robust.

Selbstverständlich sind auch andere Spulen- und Magnet-Anordnungen außer so genannten Tauchspulensystemen denkbar, die bei Stromfluss durch die Spule eine relativ zum Magneten wirkende Kraft erzeugen: beispielsweise eine Kombination aus einer flachen Spule und einem Hufeisenmagneten, in dessen Luftspalt die flache Spule so angeordnet ist, dass ihre Symmetrieachse, um die herum die Spule gewickelt ist, parallel zu den magnetischen Feldlinien verläuft, wobei der Hufeisenmagnet mit beispielsweise dem festen Teil verbunden ist, wohingegen die flache Spule mit dem wenigstens einen beweglichen Teil des Tastkopfes verbunden ist oder anders herum. An den grundsätzlichen Vor- und Nachteilen der oben beschriebenen Verfahren ändert sich durch die konkrete Bauform der krafterzeugenden elektromagnetischen Anordnung nichts.

Wird der Wicklungswiderstand einer Spule bei Raumtemperatur durch Anschluss eines negativen ohmschen Widerstandes an den Anschlussklemmen nahezu kompensiert, werden durch die Relativbewegung von Spule und Magnet nahezu beliebige Stromstärken in der Spule induziert, was die Dämpfung infolgedessen sprunghaft ansteigen lässt. Aufgrund dieser Tatsache lassen sich die Spulen für den Einsatz im Messkopf sehr klein bauen mit der Duldung eines durch dünnen Wicklungsdraht bedingten höheren Wicklungswiderstandes, der dann kompensiert wird. Durch die Wahl des negativen ohmschen Widerstandswertes im Verhältnis zum Wicklungswiderstand kann die Dämpfung in weiten Bereichen eingestellt werden. Im Gegensatz zum Regler gibt es hier keine, auf einen Sollwert zu regelnde Zustandsgröße des schwingenden mechanischen Systems, die mittels eines Sensors überwacht werden müsste, und im Gegensatz zur Wirbelstrombremse ist die Dämpfungswirkung durch Manipulation der Parameter des negativen Widerstandes in weiten Grenzen beeinflussbar.

Der negative ohmsche Widerstand wird vorteilhaft erzeugt mit Hilfe eines "Negative Impedance Converter", im Folgenden NIC genannt. Hierbei handelt es sich um eine "Black Box" mit zwei Anschlüssen, an denen der negative ohmsche Widerstand gemessen werden kann. Der Aufbau eines NIC ist Stand der Technik (Tietze/Schenk, Halbleiter-Schaltungstechnik, Springer-Verlag 1991, Seite 381). Der NIC benötigt keinerlei Informationen über die Zustandsgrößen des mechanischen Schwingungssystems. Aus diesem Grunde kommen die oben genannten Stabilitätskriterien eines geschlossenen Regelkreises nicht zur Anwendung. Bei geeignetem Aufbau des NIC lässt sich der negative ohmsche Widerstand durch Hardware oder Software einstellen. Weil der NIC durch eine aktive Schaltung realisiert werden muss, wird er wegen seiner Erwärmung vorteilhaft außerhalb des Messkopfes angeordnet.

Weitere Merkmale und Vorteile der Erfindung ergeben sich anhand der zugehörigen Zeichnung, in der ein Ausführungsbeispiel eines erfindungsgemäßen Tastkopfes nur beispielhaft dargestellt ist. In der Zeichnung zeigen:

Fig. 1    einen Tastkopf vom messenden Typ in perspektivischer Ansicht;

Fig. 2    eine Prinzipskizze einer Dämpfungseinrichtung;

Fig. 3    ein geändertes Ausführungsbeispiel einer Dämpfungseinrichtung.

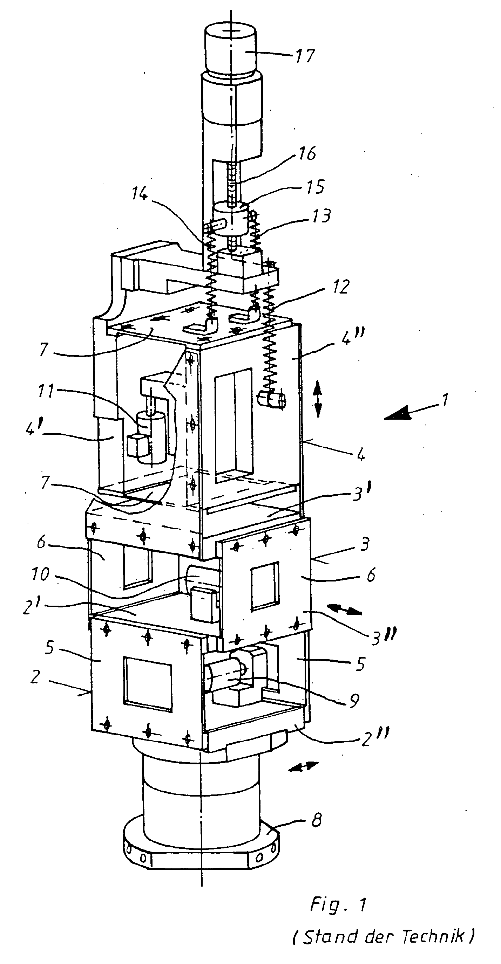

Fig. 1 zeigt einen messenden Tastkopf (1), wie er gemäß dem Stand der Technik bekannt ist. Der Tastkopf (1) weist drei Tastkopfschaukeln (2, 3, 4) auf. Die Tastkopfschaukeln (2, 3, 4) erlauben eine Auslenkung des Tastkopfes in x-, y- und z-Richtung. Hierzu weisen die Tastkopfschaukeln jeweils einen ortsfesten (2', 3', 4') und einen relativ dazu beweglichen Teil (2", 3", 4") auf. Die ortsfesten Teile (2', 3', 4') und die beweglichen Teile (2", 3", 4") sind über Federbleche (5, 6, 7) jeweils relativ zueinander verschiebbar miteinander verbunden.

An einer Tasteraufnahme (8) wird ein Taststift (nicht dargestellt) befestigt. Jede Tastkopfschaukel weist jeweils ein Wegmesssystem (9, 10, 11) auf. Der Tastkopf (1) weist Gewichtsausgleichsfedern (12, 13, 14) auf, die mit einer Spindelmutter (15) verbunden sind. Eine Spindel (16) wird zum Bewegen der Spindelmutter von einem Motor (17) angetrieben.

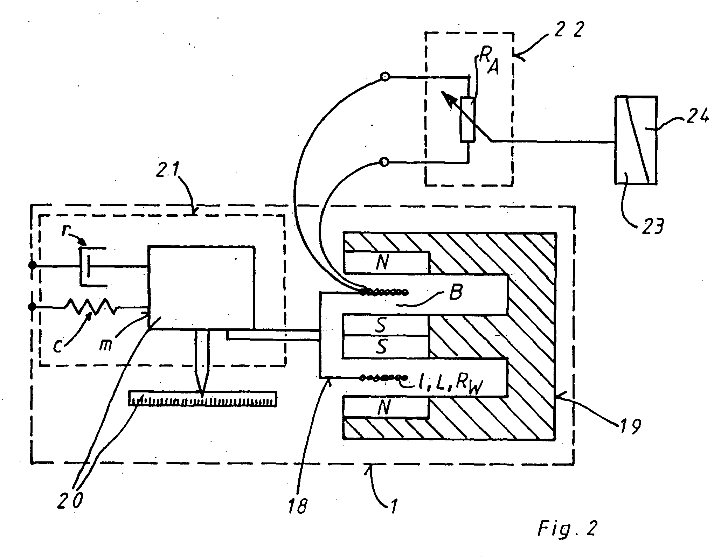

Fig. 2 zeigt eine in dem Tastkopf (1) angeordnete Dämpfungsvorrichtung mit einer Tauchspule (18), die in einen Magneten (19) greift. Die Tauchspule (18) ist mit einem Messsystem (20) verbunden, so dass sich Schwingungen eines mechanischen Schwingungssystems (21) auf die Tauchspule (18) übertragen. Die Tauchspule (18) ist mit einem negativen ohmschen Widerstand NIC (22) verbunden, der über eine Hardware (23) oder eine Firmware (24) einstellbar ist. Der NIC (22) ist außerhalb des Tastkopfes (1) angeordnet wegen seiner Erwärmung.

Ausgehend von der Übertragungsfunktion einer allgemeinen Schwingungsgleichung

$$H(s) = \frac{1}{1 + 2\,d\,(\frac{1}{2\,\pi\,f})\,s + (\frac{1}{2\,\pi\,f})^2\,s^2}$$

mit:

s =    Laplace-Operator
d =    Dämpfungsmaß der geschwindigkeitsproportionalen Dämpfung
f =    Eigenfrequenz

erhält man durch Koeffizientenvergleich mit der Übertragungsfunktion des mechanischen Schwingungssystems ohne Tauchspulensystem

$$H(s) = \frac{1}{1 + (\frac{r}{c})\,s + (\frac{m}{c})\,s^2}$$

mit:

m =    Masse
r =    Proportionalitätsfaktor der geschwindigkeitsproportionalen Dämpfung
c =    Steifigkeit

die Eigenfrequenz und das Dämpfungsmaß zu

$$f = \frac{1}{2\pi}\sqrt{\frac{c}{m}}$$

$$d = \frac{r}{2\sqrt{c\,m}}$$

und durch Koeffizientenvergleich mit der Übertragungsfunktion des mechanischen Schwingungssystems mit Tauchspulensystem

$$H(s) = \frac{1}{1 + \left(\dfrac{r}{c} + \dfrac{B^2\,l^2}{s\,L\,c + (R_A + R_W)\,c}\right)s + \left(\dfrac{m}{c}\right)s^2}$$

mit:

B = magnetische Flussdichte im Luftspalt
l = Gesamtlänge der die Feldlinien schneidenden Wicklungskomponenten
L = Spuleninduktivität
$R_A$ = Anschlusswiderstand als NIC
$R_W$ = Wicklungswiderstand

und einer Näherung durch Vernachlässigung des komplexen Widerstandes sL

$$H(s) = \frac{1}{1 + \left(\dfrac{r}{c} + \dfrac{B^2\,l^2}{(R_A + R_W)\,c}\right)s + \left(\dfrac{m}{c}\right)s^2}$$

die Eigenfrequenz und das Dämpfungsmaß zu

$$f = \frac{1}{2\pi}\sqrt{\frac{c}{m}}$$

$$d = \frac{r}{2\sqrt{c\,m}} + \frac{B^2\,l^2}{2\sqrt{c\,m}\,(R_A + R_W)}$$

Für sehr große positive Werte von $R_A$ nähert sich der zweite Summand von d gegen Null, und das Dämpfungsmaß wird ausschließlich vom Summanden von d bestimmt. Das Tauchspulensystem ist dann nicht wirksam, und das System entspricht dem mechanischen Schwingungssystem ohne Tauchspulensystem.

Nähert sich der Wert von $R_A$ dem Wert - $R_W$, wird das Dämpfungsmaß ausschließlich vom zweiten Summanden von d bestimmt und nimmt nahezu beliebig hohe Werte an.

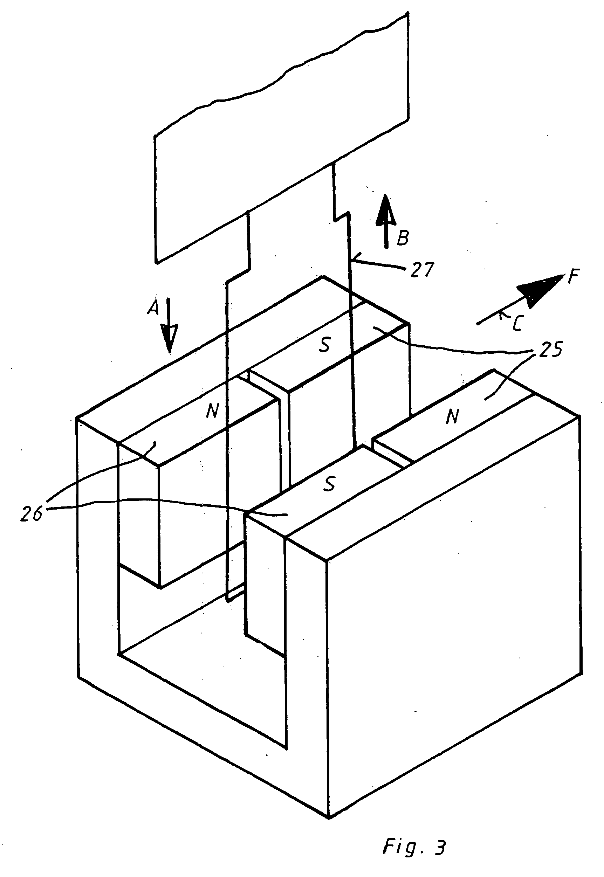

Fig. 3 zeigt eine Dämpfungseinrichtung mit Magneten (25, 26). In einem Luftspalt zwischen den Magneten (25, 26) ist eine flache Spule (27) angeordnet. Die Magnete (25, 26) sind mit einem festen Teil der Tastkopfschaukel (nicht dargestellt) und die Spule (27) ist mit einem beweglichen Teil der Tastkopfschaukel (nicht dargestellt) verbunden. Die Pfeile (A, B) zeigen die Stromrichtung und der Pfeil (C) die resultierende Kraft (F).

Bezugszahlen

| 1 | Tastkopf |
|---|---|
| 2 | Tastkopfschaukel |
| 3 | Tastkopfschaukel |
| 4 | Tastkopfschaukel |
| 2' | festes Teil der Tastkopfschaukel |
| 3' | festes Teil der Tastkopfschaukel |
| 4' | festes Teil der Tastkopfschaukel |
| 2" | bewegliches Teil der Tastkopfschaukel |
| 3" | bewegliches Teil der Tastkopfschaukel |
| 4" | bewegliches Teil der Tastkopfschaukel |
| 5 | Federblech |
| 6 | Federblech |
| 7 | Federblech |
| 8 | Tasteraufnahme |
| 9 | Wegmesssystem |
| 10 | Wegmesssystem |
| 11 | Wegmesssystem |
| 12 | Gewichtsausgleichsfeder |
| 13 | Gewichtsausgleichsfeder |
| 14 | Gewichtsausgleichsfeder |
| 15 | Spindelmutter |
| 16 | Spindel |
| 17 | Motor |
| 18 | Tauchspule |
| 19 | Magnet |
| 20 | Messsystem |
| 21 | mechanisches Schwingungssystem |
| 22 | NIC |
| 23 | Hardware |
| 24 | Software |
| 25 | Magnet |
| 26 | Magnet |
| 27 | Spule |
| A | Pfeil |
| B | Pfeil |
| C | Pfeil |
| F | Kraft |

**Patentansprüche**

1. Tastkopf vom messenden Typ für ein Koordinatenmessgerät mit einem festen Teil (4') und wenigstens einem dagegen verschieblichen Teil (2", 3", 4") und mit wenigstens einer Dämpfungsvorrichtung zur Dämpfung auftretender Schwingungen, bei dem die wenigstens eine Dämpfungsvorrichtung als ein Elektromotor (18) ausgebildet ist, **dadurch gekennzeichnet, dass** der Elektromotor (18) an wenigstens einem negativen ohmschen Widerstand (22) angeschlossen ist.

2. Tastkopf nach Anspruch 1, **dadurch gekennzeichnet, dass** der Elektromotor als Tauchspulensystem (18) ausgebildet ist.

**3.** Tastkopf nach Anspruch 1, **dadurch gekennzeichnet, dass** der Elektromotor aus wenigstens einem Hufeisenmagneten (25, 26) gebildet ist, in dem eine flache Spule (27) quer zu den magnetischen Feldlinien des Hufeisenmagneten (25, 26) beweglich angeordnet ist, und eine Symmetrieachse der Spule (27), um die herum sie gewickelt ist, in Richtung der magnetischen Feldlinien des Hufeisenmagneten orientiert ist.

**4.** Tastkopf nach Anspruch 1, **dadurch gekennzeichnet, dass** der Widerstandswert des negativen ohmschen Widerstandes (22) einstellbar ausgebildet ist.

**5.** Tastkopf nach einem der Ansprüche 1 bis 3, **dadurch gekennzeichnet, dass** zur Erzeugung des negativen ohmschen Widerstandes wenigstens ein "Negative Impedance Converter" (NIC) (22) vorgesehen ist.

**6.** Tastkopf nach Anspruch 5, **dadurch gekennzeichnet, dass** der NIC (22) außerhalb des Tastkopfes (1) angeordnet ist.

**7.** Tastkopf nach einem der Ansprüche 1 bis 3, **dadurch gekennzeichnet, dass** drei Tastkopfschaukeln (2, 3, 4) vorgesehen sind, und dass jede Tastkopfschaukel (2, 3, 4) wenigstens einen Elektromotor (18) aufweist.

**8.** Tastkopf nach Anspruch 7, **dadurch gekennzeichnet, dass** alle drei Elektromotoren mit einem einzigen negativen Widerstand in Serie geschaltet sind.

**9.** Tastkopf nach Anspruch 7, **dadurch gekennzeichnet, dass** jeder der drei Elektromotore mit einem eigenen negativen Widerstand verschaltet ist, dessen Widerstandswert unabhängig von den beiden anderen negativen Widerständen durch Hard- oder Software einstellbar ist.

**Claims**

**1.** Measuring-type scanning head for a coordinate measurement device, comprising a fixed part (4') and at least one part (2", 3", 4") that is displaceable relative to the fixed part and at least one damping device for damping vibrations that occur, wherein the at least one damping device is configured as an electric motor (18), **characterised in that** the electric motor (18) is connected to at least one negative ohmic resistor (22).

**2.** Scanning head according to claim 1, **characterised in that** the electric motor is configured as a plunger coil system (18).

**3.** Scanning head according to claim 1, **characterised in that** the electric motor is formed from at least one horseshoe magnet (25, 26), in which a flat coil (27) is disposed to be movable transversely to the magnetic field lines of the horseshoe magnet (25, 26), and an axis of symmetry of the coil (27), around which said coil is wound, is oriented in the direction of the magnetic field lines of the horseshoe magnet.

**4.** Scanning head according to claim 1, **characterised in that** the resistance value of the negative ohmic resistor (22) is adjustable.

**5.** Scanning head according to any one of claims 1 to 3, **characterised in that** at least one negative impedance converter (NIC) (22) is provided to produce the negative ohmic resistance.

**6.** Scanning head according to claim 5, **characterised in that** the NIC (22) is disposed outside the scanning head (1).

**7.** Scanning head according to any one of claims 1 to 3, **characterised in that** three scanning head rockers (2, 3, 4) are provided and **in that** each scanning head rocker (2, 3, 4) has at least one electric motor (18).

**8.** Scanning head according to claim 7, **characterised in that** all three electric motors are connected in series with a single negative resistor.

**9.** Scanning head according to claim 7, **characterised in that** each of the three electric motors is connected to its own negative resistor, the resistance value of which is adjustable independently of the other two negative resistors, by means of hardware or software.

**Revendications**

1. Tête palpeuse du type mesurant pour un appareil de mesure de coordonnées avec une partie fixe (4') et au moins une partie mobile (2", 3", 4") contre celle-ci et avec au moins un dispositif d'amortissement destiné à l'amortissement des vibrations apparaissant, dans laquelle le au moins un dispositif d'amortissement est formé en tant que moteur électrique (18), **caractérisée en ce que** le moteur électrique (18) est raccordé à au moins une résistance ohmique négative (22).

2. Tête palpeuse selon la revendication 1, **caractérisée en ce que** le moteur électrique est formé en tant que système à bobine mobile (18).

3. Tête palpeuse selon la revendication 1, **caractérisée en ce que** le moteur électrique est formé au moins d'un aimant en fer à cheval (25, 26), dans lequel une bobine plate (27) est agencée de façon mobile transversalement aux lignes de champ magnétiques de l'aimant en fer à cheval (25, 26), et un axe de symétrie de la bobine (27), tout autour duquel elle est enroulée, est orienté en direction des lignes de champ magnétiques de l'aimant en fer à cheval.

4. Tête palpeuse selon la revendication 1, **caractérisée en ce que** la valeur de résistance de la résistance ohmique négative (22) est formée de manière réglable.

5. Tête palpeuse selon l'une quelconque des revendications 1 à 3, **caractérisée en ce que** au moins « un convertisseur d'impédance négative » (CIN) (22) est prévu pour la production de la résistance ohmique négative.

6. Tête palpeuse selon la revendication 5, **caractérisée en ce que** le CIN (22) est agencé en dehors de la tête palpeuse (1).

7. Tête palpeuse selon l'une quelconque des revendications 1 à 3, **caractérisée en ce que** trois bascules de tête palpeuse (2, 3, 4) sont prévues, et **en ce que** chaque bascule de tête palpeuse (2, 3, 4) présente au moins un moteur électrique (18).

8. Tête palpeuse selon la revendication 7, **caractérisée en ce que** tous les trois moteurs électriques sont connectés en série à une seule résistance négative.

9. Tête palpeuse selon la revendication 7, **caractérisée en ce que** chacun des trois moteurs électriques est câblé avec de propre résistance négative dont la valeur de résistance peut être réglée par le matériel ou un logiciel indépendamment des deux autres résistances négatives.

Fig. 1
(Stand der Technik)

*Fig. 2*

Fig. 3